Europäisches Patentamt

(19) European Patent Office

Office européen des brevets

(11) Numéro de publication: **0 218 856**
**B1**

# (12) FASCICULE DE BREVET EUROPEEN

(45) Date de publication du fascicule du brevet:
07.02.90

(51) Int. Cl.⁴: **B23C 5/10, B23C 5/22**

(21) Numéro de dépôt: 86111714.1

(22) Date de dépôt: **23.08.86**

(54) **Fraise pour usiner les rainures en T.**

(30) Priorité: **13.09.85 CH 3985/85**

(43) Date de publication de la demande:
**22.04.87 Bulletin 87/17**

(45) Mention de la délivrance du brevet:
**07.02.90 Bulletin 90/6**

(84) Etats contractants désignés:
**AT BE DE FR GB IT LU NL SE**

(56) Documents cités:
**DE-A- 1 905 038**
**GB-A- 2 016 337**

**WERKSTATT UND BETRIEB,**
**vol. 117, no. 4, avril 1984, pages 235-239, C. Hanser**
**Verlag, Munich, DE; H. SCHULZ et al.: "Eigenschaften,**
**Herstellung und Bearbeitung faserverstärkter**
**Kunststoffe"**

(73) Titulaire: **STELLRAM S.A., Route de l'Etraz,**
**CH-1260 Nyon, Vaud(CH)**

(72) Inventeur: **Aebi, Gilbert, Route de Nyon, CH-1261 -**
**Trelex/Vaud(CH)**

(74) Mandataire: **Micheli, Michel-Pierre et al, MICHELI &**
**CIE 118, Rue du Rhône Case Postale 47,**
**CH-1211 Genève 6(CH)**

**Description**

La présente invention se rapporte aux outils de coupe pour l'usinage des métaux et a plus particulièrement pour objet une fraise pour usiner les rainures en T selon le préambule de la revendication 1.

Jusqu'ici l'usinage des rainures en T a toujours été un problème en raison du manque de rigidité des fraises disponibles sur le marché dont la tête, en particulier dans le cas d'une exécution à plaquettes amovibles en métal dur telle que connue à ce jour, ne comporte qu'une faible paroi de matière pour supporter lesdites plaquettes. C'est ainsi que les efforts de coupe relativement importants auxquels ces fraises sont soumises, leur tête étant "emprisonée" dans la pièce usinée, engendrent très rapidement des vibrations, même à des vitesses d'avance réduites. Ceci a pour effet qu'il n'était pas possible d'utiliser des outils à plaquettes de coupe en métal dur sans que les arêtes de coupe de ces plaquettes ne s'effritent et, par conséquent, que l'outil ne coupe plus au bout de très peu de temps. C'est pourquoi on utilise à l'heure actuelle de préférence des fraises en acier rapide plus ductile que les métaux frittés, mais il est évident que le rendement de tels outils n'est pas comparable avec les performances de coupe que l'on peut attendre des outils modernes à plaquettes de coupe en métal dur, tel que le carbure de tungstène.

Les faibles épaisseurs de parois précitées sont dues au vide important, traversant toute la hauteur axiale de la tête de la fraise, que l'on a ménagé jusqu'ici devant chacune de ses dents pour favoriser la formation et le dégagement des copeaux. Mais comme on l'a vu plus haut, ces fraises sont malheureusement sujettés aux vibrations car les parois fléchissent lors de la coupe, lesdites vibrations accélérant l'usure du tranchant de l'outil.

L'outil divulgué dans le document GB-A 2 016 337 comme description de l'état de la technique le plus proche permet de remédier partiellement aux inconvénients précités. Par contre, en présentant comme logements pour les plaquettes de coupe amovibles des fentes étroites traversantes axialement, cet outil est encore plus défavorable que ceux précités, étant donné qu'il ne comporte aucun évidement pour le dégagement des copeaux et ne peut ainsi permettre que de travailler dans de très mauvaises conditions pratiques.

La présente invention a pour but d'obvier aux inconvénients précités et de permettre la réalisation d'une fraise pour l'usinage des rainures en T permettant l'utilisation rationnelle de plaquettes de coupe amovibles en métal dur et donc d'obtenir un rendement élevé tout en présentant d'excellentes capacités d'évacuation des copeaux.

La fraise objet de la présente invention se distingue par les caractéristiques énumérées à la revendication 1.

Le dessin annexé illustre schématiquement et à titre d'exemple une forme d'exécution de la fraise pour rainures en T selon l'invention.

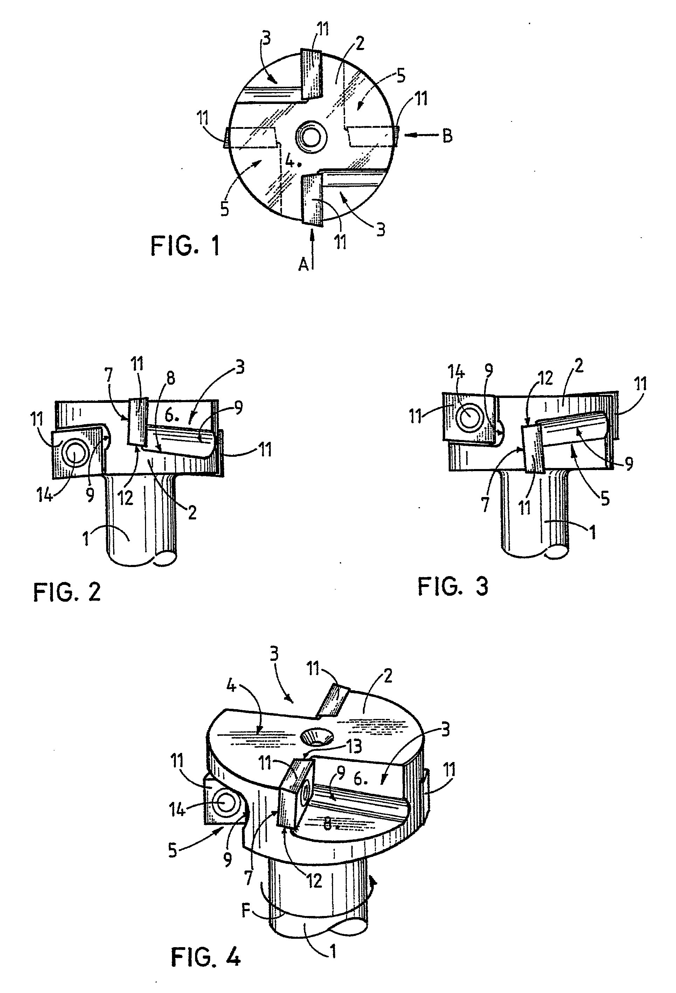

La figure 1 en est une vue frontale.

La figure 2 en est une vue de côté suivant la flèche A.

La figure 3 en est une vue de côté suivant la flèche B.

La figure 4 en est une vue en perspective à plus grande échelle.

La fraise pour l'usinage de rainures en T illustrée comporte un axe 1 dont l'extrémité (non illustrée) est destinée à être fixée sur la broche d'une machine-outil pour son entraînement en rotation dans le sens de la flèche F. Cet axe se termine par une tête 2 présentant la forme générale d'un disque.

Ce disque 2 comporte des évidements non traversants 3, ouverts sur la périphérie de la tête et sur sa face frontale ou terminale 4, diamétralement opposés par rapport à l'axe de rotation de la fraise. Ce disque 2 comporte encore des évidements non traversants 5, également diamétralement opposés mais décalés angulairement par rapport aux évidements non traversants 3, ouverts sur la périphérie du disque 2 et sur sa face arrière du côté de l'axe 1.

Chaque évidement 3,5 comporte deux faces latérales 6,7 approximativement orthogonales et parallèles à l'axe 1 et un fond 8. Un arrondi 9 est pratiqué dans les zones où la face 6 et le fond 8 s'intersecteraient ceci pour éviter les angles vifs qui pourraient constituer une amorce de fissure et entraver la formation et le dégagement des copeaux.

La face latérale 7 des évidements 3,5 sert de face de positionnement et d'appui à une plaquette de coupe 11 amovible en métal dur. Cette plaquette est positionnée sur cette face par des épaulements 12,13 et est fixée dans la face d'appui 7, par exemple à l'aide d'une vis centrale 14.

Dans l'exemple illustré, on obtient ainsi un outil de coupe comprenant quatre plaquettes de coupe, décalées axialement deux à deux et dont les arêtes périphériques se chevauchent pour usiner la hauteur de la rainure en T et ses parois latérales tandis que les arêtes de coupe radiales de deux plaquettes usinent le fond de la rainure et celles des deux autres plaquettes de coupe les surfaces supérieures de la rainure en T.

La fraise ainsi réalisée est extrêmement rigide de par sa tête en forme de disque comportant des évidements non traversants; elle ne vibre pas ou pratiquement pas, ce qui permet l'utilisation de plaquettes de coupe en métal dur et donc l'obtention d'un rendement de coupe élevé.

Des essais réalisés avec une telle fraise ont montré qu'il était possible d'usiner une même rainure en T avec des avances de coupe de 3 à 6 fois supérieures à celles actuellement possibles avec les fraises existantes, comme le montrent les résultats d'essais reportés ci-après.

a) avec une fraise selon l'ancienne conception, à denture traditionnelle munie de plaquettes de coupe amovibles de forme E, les essais effectués dans de l'acier de construction, à une vitesse de coupe de l'ordre de 100 m/min, ont montré que des valeurs d'avance par dent situées vers 0,03 mm ne pouvaient être dépassées sans engendrer des vibrations et tendre vers la casse de la fraise.

Essai No 1

Fraise à T O 18 mm z = 2 x 2 dents
vitesse de coupe v = 98 m/min
avance de la table S = 99 mm/min
avance par dent s$_z$ = 0,028 mm/dent

Essai No 2

Fraise à T O 25 mm z = 2 x 2 dents
vitesse de coupe v = 102 m/min
avance de la table S = 82 mm/min
avance par dent s$_z$ = 0,031 mm/dent

b) avec une fraise selon l'invention munie de plaquettes de coupe amovibles de forme M. Les essais effectués dans de l'acier de construction, à une vitesse de coupe de l'ordre de 130 à 140 m/min, ont permis d'atteindre sans aucun problème des valeurs d'avance par dent de 0,15 mm à 0,20 mm.

Essai No 1

Fraise à T O 18 mm z = 2 x 2 dents
vitesse de coupe v = 127 m/min
avance de la table S = 450 mm/min
avance par dent s$_z$ = 0,10 mm/dent

Essai No 2

Fraise à T O 25 mm z = 2 x 2 dents
vitesse de coupe v = 140 m/min
avance de la table S = 540 mm/min
avance par dent s$_z$ = 0,15 mm/dent

Essai No 3

Fraise à T O 32 mm z = 2 x 2 dents
vitesse de coupe v = 140 m/min
avance de la table S = 720 mm/min
avance par dent s$_z$ = 0,20 mm/dent

Ce qui est particulièrement surprenant c'est que même à de fortes valeurs d'avance par dent la formation et le dégagement des copeaux s'affectuent parfaitement, bien que la tête de la fraise n'ait aucun passage traversant axial, ce que réduit donc sensiblement le volume de la chambre à copeaux; tous les copeaux sont dégagés latéralement dans la portion de rainure déjà usinée et, de plus, ne viennent pas se loger entre la surface de la rainure usinée et le corps de la fraise comme cela peut se produire avec les fraises conventionnelles à évidements traversants. Ceci est à tel point surprenant que tous les spécialistes de l'usinage de métaux ne voulaient pas croire à une utilisation possible d'une telle fraise sans risque de destruction rapide et encore moins à ses performances jusqu'à ce qu'ils l'aient vue travailler de leurs propres yeux.

Dans des variantes il est évident que le nombre de logements 3,5, donc de plaquettes de coupe, pourrait être différent de quatre.

**Revendications**

1. Outil de coupe à plaquettes de coupe amovibles en métal dur pour l'usinage dans de métaux de rainures en T, comportant un axe (1) destiné à être fixé sur la broche d'une machine pour son entraînement en rotation, dont l'extrémité libre présente une tête (2) en forme de disque, et des logements pratiqués dans cette tête pour recevoir lesdites plaquettes qui sont fixées de manière amovible contre une face d'appui (7) que présente chaque logement, caractérisé par le fait que la tête (2) de l'outil comporte des premiers et seconds évidements (3, 5) non traversants axialement servant de chambres à copeaux et par le fait que les premiers évidements non traversants (3) s'ouvrent sur la périphérie de la tête (2) et sur sa face frontale, et que les seconds évidements non traversants (5), décalés angulairement par rapport aux premiers évidements (3), s'ouvrent sur ladite périphérie de la tête et sur sa face arrière.

2. Outil selon la revendication 1, caractérisé par le fait que les plaquettes de coupe (11) fixées dans les premiers logements (3) sont décalées axialement par rapport à celles fixées dans les seconds logements (5), les arêtes de coupe périphériques de ces plaquettes toutes situées sur un même diamètre, se chevauchant.

3. Outil selon la revendication 1 ou la revendication 2, caractérisé par le fait que la face latérale libre (6) des évidements (3, 5) et le fond (8) de ces évidements sont reliées par un arrondi (9).

**Claims**

1. Cutting tool with indexable cutting inserts for the machining of T-shaped grooves in metals, comprising a shaft (1) intended to be fixed onto the spindle of a machine for its driving into rotation, the free end of which has a disc-shaped head (2), and housings provided in this head for receiving said inserts, which are fixed in a removable manner against a seating face of each housing, characterized by the fact that the head (2) of the tool comprises first and second axial blind recesses (3, 5) using as chips chambers, and by the fact that the first blind recesses (3) are opened on the periphery of the head (2) and on its frontal face, and that the second blind recesses (5), angularly displaced with respect to the first recesses (3), are opened said periphery of the head and on its rear face.

2. Tool according to claim 1, characterized by the fact that the cutting inserts (11) fixed in the first housings (3) are axially displaced with respect to those fixed in the second housings (5), the peripheral cutting edges of these inserts all located on the same diameter overlapping each other.

3. Tool to claim 1 or to claim 2, characterized by the fact that the lateral free face (6) of the recesses (3, 5) and the bottom (8) of these recesses are bound by a rounded portion (9).

**Patentansprüche**

1. Schneidwerkzeug mit lösbaren Schneidplättchen aus Hartmetall zum Fräsen von T-Nuten in Metall, umfassend eine Achse (1), die dazu bestimmt ist, auf der Welle bzw. Spindel einer Maschine für ihren Drehantrieb befestigt zu werden, deren freies Ende einen Kopf (2) in Form einer Scheibe aufweist, wobei in diesem Kopf Lagerungen bzw. Ausnehmungen für die Aufnahme der genannten Plättchen ausgebildet sind, die lösbar gegen eine Abstützfläche (7) befestigt sind, mit der jede der Lagerungen bzw. Ausnehmungen versehen ist, dadurch gekennzeichnet, daß der Kopf (2) des Werkzeugs erste und zweite axial nicht durchgehende Lagerungen bzw. Ausnehmungen (3, 5) aufweist, die als Spankammern dienen und daß die ersten nicht durchgehenden Lagerungen bzw. Ausnehmungen (3) auf dem Umfang des Kopfes (2) und an seiner Stirnfläche münden und daß die zweiten nicht durchgehenden Lagerungen bzw. Ausnehmungen (5), die in bezug auf die ersten Lagerungen bzw. Ausnehmungen (3) winkelversetzt sind, auf dem genannten Umfang des Kopfes und an seiner Hinterfläche münden.

2. Werkzeug nach Anspruch 1, dadurch gekennzeichnet, daß die in den ersten Lagerungen bzw. Ausnehmungen (3) befestigten Schneidplättchen (11) axial in bezug auf jene versetzt sind, die in den zweiten Lagerungen bzw. Ausnehmungen (5) befestigt sind und daß die Umfangsschneidkanten dieser Plättchen alle einander überlappend auf einem gleichen Durchmesser gelegen sind.

3. Werkzeug nach Anspruch 1 oder 2, dadurch gekennzeichnet, daß die freie Seitenfläche (6) der Lagerungen bzw. Ausnehmungen (3, 5) und der Boden (8) dieser Lagerungen bzw. Ausnehmungen durch eine Rundung (9) verbunden sind.

FIG. 1

FIG. 2

FIG. 3

FIG. 4